Europäisches Patentamt

European Patent Office

Office européen des brevets

(11) Publication number: **0 105 974**
**A1**

(12) **EUROPEAN PATENT APPLICATION**

(21) Application number: 82201261.3

(22) Date of filing: 11.10.82

(51) Int. Cl.³: **G 06 K 13/07**

(43) Date of publication of application: 25.04.84
Bulletin 84/17

(84) Designated Contracting States: **AT BE CH DE FR GB IT
LI LU NL SE**

(71) Applicant: **Landis & Gyr B.V., Postbus 444, NL-2800 AK
Gouda (NL)**

(72) Inventor: **Hulst, Marcelis, Bolsestraat 45, NL-5161 AL
Sprang-Capelle (NL)**

(74) Representative: **den Boer, Jan Johannes, Ir.,
Octrooibureau Polak & Charlouis Laan Copes van
Cattenburch 80, NL-2585 GD The Hague (NL)**

(54) **Magnetic card reading apparatus.**

(57) This magnetic card reading apparatus can handle credit
cards having creased edges and is compact in that it has a
single stepping motor for carrying out all movements. The
cards are clamped against a rotary drum by a clamping
lever which is connected pivotally to the drum. Along the
drum a magnetic reading head, writing head and printer are
arranged. Said heads and printer are further spaced from
the drum during non-operation than in operative condition
whereby damaging the heads, printer and drum is avoided.

ACTORUM AG

W 5893-2 Eur.P.dB/LvD

Titel : Magnetic card reading apparatus.

0105974

The invention relates to a magnetic card reading apparatus having a card drive, a magnetic tape reading head and, if necessary, a magnetic tape writing head, the reading head controlling the card drive through a micro-processor by means of an electric stepping motor.

Similar apparatus are known. They are used for so called credit cards, issued by banks, department stores, pleasure grounds and also as ticket cards for public transport and so on.

In the previous Dutch patent application 8200295 by same Applicant, a magnetic card reading apparatus is described, comprising a printing device or printer, whereby data also may be registered visibly on the card, instead of only magnetically. The card drive past .. the reading head is obtained with a first drive motor, driving conveyor belts for linear card transportation. Thereafter the card engages a transport clamp which is driven through a screw spindle, which in turn, is drivable by an other drive motor, preferably an electric stepping motor. The clamp moves the card stepwise along the printer such that the card lines are accurately aligned relative to the printer needles. Thereby the accurate alignment of the card lines relative to the printer is not always achieved, namely in cases in which the card edge to be clamped is not completely smooth (creases, dog-ears), because the clamp has an insert slot delimited by fixed jaws. Furthermore the dimensions of the apparatus are rather large due to the conveyor belts used for the card transport and the fact that two motors are necessary, namely for driving the cards and for the screw spindle drive.

The invention aims at removing the above mentioned disadvantages and at providing a very compact apparatus, which clamps the cards always by the same clamping length and has only one drive motor for the continuous movement during reading and writing and for the intermittent movement during printing.

This is achieved according to the invention in that the magnetic card drive comprises a rotary drum, a card clamping lever, cooperating with said drum, the lever being a rocker lever, which is connected to the drum, pivotally around a point intermediate its ends, one end of said lever being adapted to clamp a card tightly against the drum through spring action and is provided with an abutment for the card, the other end of said lever being provided with a cam adapted to cooperate with a roller, which is pivotal in one direction, said roller being arranged to pivot the rocker lever for releasing a card, a needle printer being provided in the apparatus adjacent the roller and opposite to the drum shell.

The rocker lever is permitted to yield against the spring action if a card, having a not completely smooth inserting end is inserted, so that the card through the abutment therefore on the lever is positioned accurately in a fixed position on the drum.

Preferably the roller is provided at the end of an arm, the other end of which is pivotal around a fixed point, a fixed abutment for said arm preventing movement of the arm in the card extracting direction of the drum movement beyond the radial position of the arm relative to the drum. If the drum moves in the card inserting direction, the cam of the rocker lever pivots the arm, having the roller, freely out of the way, whereas with the drum movement in the card extracting direction the cam presses the arm having the roller against the fixed abutment whereafter the roller pivots the lever for releasing the card.

The magnetic tape reading head and writing head respectively and the needle head of the printer have to be situated as close as possible to the credit card in the card positions in which said heads are permitted to operate on a card line. Since the card in the operational condition engages the abutment of the card clamping lever, said card positions correspond to predetermined drum positions. In order to prevent damaging the heads and/or the drum it would be preferable if the heads would be situated spaced further from the drum in the other drum positions.

Thereto the apparatus may be constructed according to the invention such that an arm carries the reading head, the writing head or the printer head of the printer at one end, is mounted pivotally around a fixed point and carries beyond said pivot point a second arm carrying a roller at its free end, said rollers each being pushed by a spring, acting on the arm, against a cam secured to the drum shaft and belonging to said arm. The cams lift due to their cam contour the relative head through the largest part of a drum revolution. The invention will hereunder be illustrated with reference to the drawing, showing an embodiment of the reading apparatus according to the invention, given as an example.

Fig. 1 shows the schematic assembly of the apparatus.

Fig. 2 is a detail drawing and shows the rocker lever.

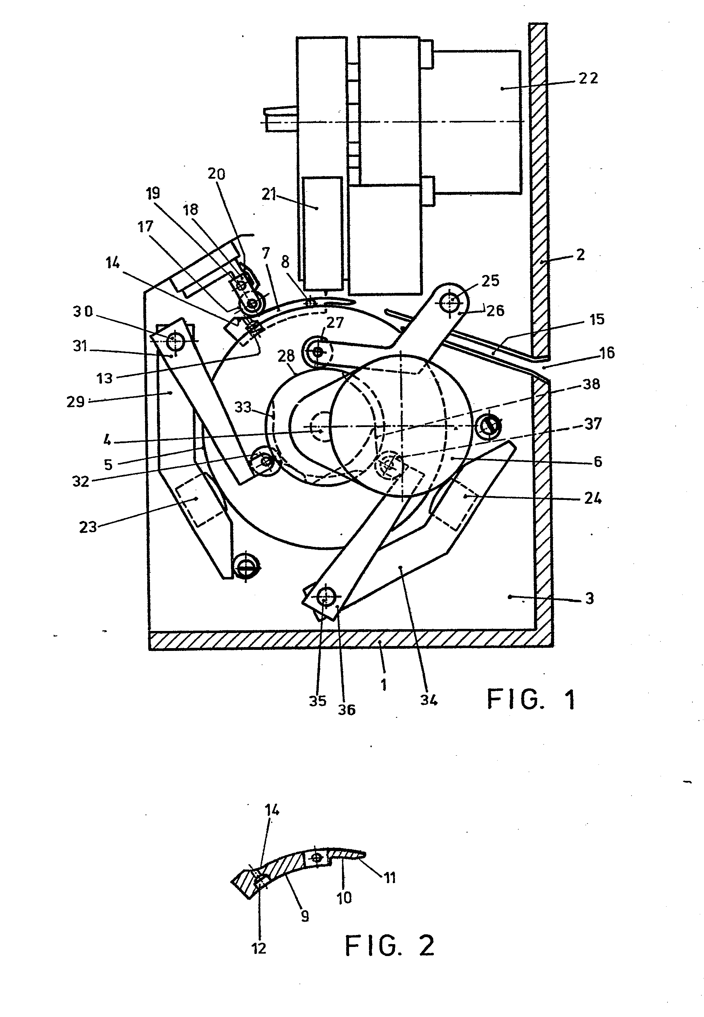

The apparatus according to fig. 1 has a frame or housing having a bottom plate 1, a side plate 2, a back wall 3 and a front wall, not shown. Of course the apparatus may be placed differently in space than has been shown, whereby e.g. the bottom plate becomes a side plate and the side plate 2 becomes the bottom plate. A shaft 4 has been provided in the frame, suitably journalled therein, a cilindrical drum 5. having been secured to said shaft. The shaft 5 simultaneously constitutes or has been rigidly connected to the output shaft of a stepping motor 7, fixedly mounted in the frame. A rocker lever 7 has been mounted to the cilindrical shell of the drum 5, which lever is pivotal around the shaft 8, secured in a recess (not shown) in the drum shell. Said shaft 8 extends parallel to the drum shaft 4. The rocker lever 7 has been shown more clearly in figure 2. A recessed step 10 has been provided in the under surface 9 of said lever, such that the undersurface of said step may engage part of the drum shell directly adjacent the recess into which the surface 9 of the lever extends. The portion 10 of the lever serves for clamping a credit card against the drum shell and is provided with a bevelled edge 11 for inserting said card. The rocker lever or paper clamp has at its end opposite to the clamping end in its under surface 9 a stepped bore 12 in which a small coil spring 13 has been provided or secured, the upper end of which engages the shoulder of the stepped bore 12 and the under end of which engages the bottom of the recess in the drum. The upper surface of the lever 7 has a cam contour 14 which extends upwardly adjacent to the spring end of said lever.

The drum 5 with the clamp 7 has been shown in fig. 1 in a rest position. An inserting passage 15 has been provided in the apparatus which opens into an insert aperture 16 in the sidewall of the apparatus. If a card is inserted into the opening 16 it passes a photocell (not shown) which issues a signal to the stepping motor 6 whereby the drum is rotated to a position (not shown) starting from the position shown in fig. 1, against the arrow shown in fig. 1, until a position is reached in which the step 10 of the lever 7 is situated adjacent to the upper end of the inserting passage 15. A roller 7 engages the cam contour 14 of the lever, said roller being rotatably connected to the one end of an arm 18, the other end of which is pivotally connected to an shaft 19 which is secured in the frame of the apparatus. At the side of the arm 18 facing the card inserting end of the drum an abutment 20 has been secured in the frame, said abutment preventing that the arm 18 is pivoted around its shaft 19 against movement of the clock (in fig. 1) beyond said abutment 20. When the drum is rotated under the influence of the photocell, the higher end of the cam contour 14, which is situated in fig. 1 to the left of the roller 17, passes said roller, whereby (because the roller is retained by the abutment 20) the lever pivots such that the clamping end is moved away from the drum shell. Also with a creased front edge of the card, the surface 10 of the clamp slides on top of said edge. After the higher end of the cam contour has left the roller, the lever pivots backwardly under the influence of the spring 13 and the card is clamped against the drum. Thereafter the rotational direction of the drum is reversed whereby the cam contour is permitted to pass the roller 17 without being influenced thereby because the arm 18 may pivot without restrictions in the direction away from the abutment 20.

The frame of the apparatus further comprises a needle printing device or printer 21 having a drive motor 22, a magnetic reading head 23 and a magnetic writing head 24. Under the influence of a microprocessor (not shown), after inserting a card, the drum 5 is driven by the stepping motor 6 and the printer 21 is actuated by the microprocessor in certain accurately predetermined positions so that the data registered by the reading head 23 on a magnetic card portion may be read and operated upon by the microprocessor, as well as data may be registered on the card by the writing head 24. While the drum 5 is rotated forwardly the roller 17 moves along the upper surface 14 of the rocker lever 7 but does not influence the position thereof. When the operations on the card have been completed, the drum 5 rotates in the opposite direction and in a predetermined moment, just past the position shown in fig. 1, the rising portion of the cam contour 14 contacts the roller 17 and said roller pushes the relative lever end against the influence of the spring 13 downwardly in that said roller engages the abutment 20, whereby the card is released from its clamping condition and may be taken from the apparatus.

In order to prevent that the head of the printer and the magnetic heads are always situated at operating distance from the drum, said heads have been mounted pivotally and they are lifted through a slight distance from the drum shell if no card portion to be operated upon is opposite to the relative head. Thereto the head of the printer is secured to a pivot arm (not shown) the end of which opposite to the head is secured to a shaft 25 journalled in a frame, an arm 26 being likewise secured to said shaft, the free end of said arm 26 carrying a roller 27. The arm 26 is biased by a torsion spring (not shown) on the shaft 25 in the direction wherein the roller 27 engages a cam disc 28 secured to the drum shaft 4. If a lowered contour portion of the cam disc 28 arrives opposite to the roller 27 due to the rotation of the drum, the arm 26 pivots such that the head is positioned in its operative position.

Likewise the reading head 23 is secured to an arm 29, secured

0105974

to a pivotable shaft 30 to which likewise an arm 31 is secured which carries at its free end a roller 32 engaging a cam disc 33 on the drum shaft 4.

-----------------

- 6 -

0105974

## C L A I M S

1. Magnetic card reading apparatus having a card drive, a magnetic tape reading head and, if necessary, a magnetic tape writing head, the reading head controlling the card drive by a micro-processor by means of an electric stepping motor, characterized in that the magnetic card drive comprises a rotary drum(5),a card clamping lever(7),cooperating therewith, said lever being a rocker lever, which is pivotally connected to the drum (5) around a point (8) intermediate its ends, one end (10) of said lever being adapted to clamp a card by means of spring action (13) fixedly against the drum and is provided with a card abutment (9, 10), the other end of said lever carrying a cam (14) adapted for cooperation with a roller (17) which is pivotal in one direction and is adapted to pivot the rocker lever (7) for releasing a card, a needle printer (21) being provided in the apparatus adjacent the roller (17) and opposite to the drum shell.

2. Apparatus according to claim 1, characterized in that the roller(17) is provided at the end of an arm (18) the other end of which is pivotal around a fixed point (19), a fixed abutment (20) for said arm (18) preventing movement of the arm in the card extracting direction of the drum movement beyond the radial position of said arm relative to the drum.

3. Apparatus according to claim 1 or 2, characterized in that an arm (29, 34) carries at one end the reading head (23), the writing head (24) or the needle head of the printer (20) , is pivotally mounted around a fixed point (30, 35, 25) and carries beyond said pivot point an other arm (31, 24, 26) having at its free end a roller (32, 37, 27), each of said rollers being pressed into engagement with a cam disc (33, 38, 28) belonging to said arm and secured to the drum shaft (4) by means of a spring acting on said arm.

---------------

0105974

FIG. 1

FIG. 2

# 0105974

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 262 312 (FUKUDA) <br> * Figures 1-4; column 1, lines 41-58 * | 1,3 | G 06 K 13/07 |
| Y | FR-A-1 057 003 (REMINGTON RAND) <br> * Figure 2; page 2, column 2, paragraph 6 - page 3, column 1, paragraph 5 * | 1 | |
| A | DE-A-2 244 490 (ADDRESSOGRAPH-MULTIGRAPH CORP.) <br> * Figure 5; page 6 * | 1 | |
| A | GB-A-2 092 348 (PERSSON) <br> * Figure 2 * | 1 | |
| A | US-A-4 141 044 (KISTNER) <br> * Figures 1-5; abstract * | 1 | TECHNICAL FIELDS SEARCHED (Int. Cl. ³) <br><br> G 06 K |

The present search report has been drawn up for all claims

| Place of search THE HAGUE | Date of completion of the search 02-06-1983 | Examiner PESCHEL W. |
|---|---|---|